# EUROPÄISCHE PATENTSCHRIFT

(11) **EP 2 185 835 B1**
(45) Veröffentlichungstag und Bekanntmachung des Hinweises auf die Patenterteilung: **25.01.2012**
(21) Anmeldenummer: 08735322.3
(22) Anmeldetag: 18.04.2008
(51) Int. Cl.: F16F 9/36

(54) **VERFAHREN ZUR HERSTELLUNG EINES KOLBENS**
PRODUCTION METHOD OF A PISTON
PROCEDE DE FABRICATION D'UN PISTON

(30) Priorität: 30.07.2007 DE 102007036017
(43) Veröffentlichungstag der Anmeldung: 19.05.2010
(73) Patentinhaber: GKN Sinter Metals Holding GmbH, 42477 Radevormwald (DE)
(72) Erfinder: GRUBER, Rainer, 53343 Wachtberg (DE); CASELLAS, Antonio, 53721 Siegburg (DE); SCHNEID, Stefan, 53424 Remagen (DE)
(74) Vertreter: Maxton Langmaack & Partner
(86) Internationale Anmeldenummer: PCT/EP2008/003127
(87) Internationale Veröffentlichungsnummer: WO 2009/015710

(56) Entgegenhaltungen:
- EP-A- 0 658 611
- WO-A-00/34682
- JP-A- 10 089 479
- JP-A- 61 082 072
- JP-A- 63 172 061

## Beschreibung

Die Erfindung betrifft ein Verfahren zur Herstellung eines Kolbens.

Die EP 1 121 544 B1 beschreibt einen Kolben für eine Kolben-Zylinder-Anordnung, insbesondere einen Stoßdämpferkolben, der einen Kolbenkörper, der eine Umfangsfläche aufweist, und eine Dichtmanschette aufweist. Die Dichtmanschette weist eine äußere Umfangsfläche, eine innere Umfangsfläche, eine erste Randfläche und eine erste Dichtlippe auf und verläuft um die Umfangsfläche es Kolbenkörpers herum und bedeckt in axialer Richtung wenigstens einen Teil der Umfangsfläche. Die erste Randfläche verbindet an einem ersten Ende der Dichtmanschette die beiden Umfangsflächen miteinander. Die Dichtlippe wird durch die erste Randfläche und die äußeres Umfangsfläche begrenzt und steht radial nach außen von der äußeren Umfangsfläche vor.

Die EP 1 121 544 B1 beschreibt außerdem ein Verfahren zur Herstellung eines solchen Kolbens gemäß dem Oberbegriff des Anspruchs 1 mit den Schritten, dass:
a) ein Dichtrohling und ein Kolbenkörper bereit gestellt werden,
b) dann der Dichtrohling über den Kolbenkörper geschoben wird, und
c) der Dichtrohling an den Kolbenkörper gepresst wird.

Bei diesem bekannten Kolben besteht die Dichtmanschette aus einem warm verformbaren Kunststoff, vorzugsweise aus PTFE (Polytetrafluorethylen), und sie wird gemäß diesem bekannten Verfahren durch Warmumformung aus einer Kreisringscheibe, die den Dichtrohling darstellt, auf die Umfangsfläche des Kolbenkörpers aufgeformt. Hierzu wird die Kreisringscheibe bzw. der Dichtrohling auf ein Ende des Kolbenkörpers aufgesetzt und der so vorbereitete Kolbenkörper in einen aufgeheizten Form- und Kalibrierzylinder eingepresst, wobei die Kreisringscheibe als Band auf die Umfangsfläche des Kolbenkörpers umgelegt und anschließend unter Wärmeeinfluss gegen die Umfangsfläche des Kolbenkörpers gepresst wird. Dabei ist der Kolbenkörper auf seiner Umfangsfläche mit wenigstens einem umlaufenden Steg versehen, der für eine einwandfreie und zuverlässige Verbindung zwischen Dichtmanschette und Kolbenkörper sorgen soll. Schließlich wird der mit seiner aufgepressten Dichtmanschette versehene Kolben durch ein Kühlrohr geführt. Das Phänomen der "Rückerinnerung" des Kunststoffmaterials der Dichtmanschette bewirkt, dass nach dem Umformen der eine Rand der Dichtmanschette, der durch den Innenrand der Kreisringscheibe gebildet wird, sich nach innen zusammenzieht und der andere, gegenüberliegende Rand der Dichtmanschette, der durch den Außenrand der Kreisringscheibe gebildet wird, sich nach außen zurückstellt und hierbei nach Art einer Dichtlippe die übrige Umfangsfläche der Dichtmanschette überragt.

Die Dichtlippe dieses bekannten Kolbens entsteht bei diesem bekannten Verfahren also dadurch, dass sich die Dichtmanschette an ihre ursprüngliche Form der Kreisringscheibe erinnert. Dieser bekannte Kolben und dieses bekannte Verfahren weisen den Nachteil auf, dass die Dichtlippe aufgrund der inneren Spannungen, die herstellungsbedingt während des Umformens der Kreisringscheibe zur Dichtmanschette gebildet werden, relativ stark gewellt ist, wodurch die Dichtfunktion beeinträchtigt werden kann.

Die JP 61 082 072 A beschreibt ebenfalls ein Verfahren zur Herstellung eines Kolbens gemäß dem Oberbegriffs des Anspruchs 1. Bei diesem bekannten Verfahren besteht der Dichtrohling aus einem Tetrafluorethylen-Harz.

Die DE 195 13 727 B4 beschreibt ebenfalls einen Kolben sowie ein Verfahren zur Herstellung eines solchen Kolbens gemäß dem Oberbegriffs des Anspruchs 1. Dieser bekannte Kolben weist ein Trägerteil und einen das Trägerteil außenseitig zumindest teilweise umschließenden Führungsring aus einem polymeren Werkstoff, bevorzugt aus PTFE auf. Das Trägerteil weist zumindest eine radial in Richtung des Führungsrings offene, umfangseitig umlaufende Nut auf, die mit einem radial in Richtung des Trägerteils vorstehenden, montagebedingten Vorsprung des Führungsrings in Eingriff ist. Der Führungsring weist beiderseits jeweils eine montagebedingte, einstückig angeformte und sich in axialer Richtung erstreckende Dichtlippe auf. Die Dichtlippen überragen die Berührungsfläche des Trägerteils in axialer Richtung. Bei diesem bekannten Verfahren wird der Rohling des Führungsrings außenseitig über das Trägerteil geschoben und anschließend ausschließlich radial gleichmäßig vollumfänglich bis über den fließfähigen Zustand des Führungsringmaterials hinaus verpresst. Da dabei das Material des Führungsrings zu fließen beginnt, werden die Nuten des Trägerteils vom Werkstoff des Führungsrings vollständig ausgefüllt. Während der Werkstoff des Führungsrings allmählich in die Nuten des Trägerteils fließt und diese ausfüllt, fließen Anteile dieses Materials durch die radiale Verpressung in axialer Richtung entlang der Umfangsfläche des Trägerteils und bilden die Dichtlippen. Die Dichtlippen werden also durch das beim radialen Verpressen in axialer Richtung ausweichende Material des Führungsrings gebildet.

Dieser bekannte Kolben und dieses bekannte Verfahrne weisen den Nachteil auf, dass die Dichtlippen herstellungsbedingt eine relativ schlechte Fertigungspräzision aufweisen, da das Material des Führungsrings beim radialen Verpressen in axialer Richtung frei fließen kann.

Es ist Aufgabe der vorliegenden Erfindung, ein Verfahren zur Herstellung eines Kolbens zu verbessern.

Diese Aufgabe wird gelöst durch ein Verfahren zur Herstellung eines Kolbens gemäß Anspruch 1. Weitere Ausführungsformen sind in den Unteransprüchen beschrieben.

Die Erfindung schlägt bei einem Verfahren gemäß dem Oberbegriff des Anspruchs 1 vor, dass in einem Schritt d) der Dichtrohling an seinem ersten Ende abgelängt wird, und dass in einem Schritt e) an dem ersten Ende die Dichtlippe mit dem gewünschten Profil geformt wird. Dabei können nach Bedarf die Schritte d) und e) in dieser Reihenfolge oder gleichzeitig ausgeführt werden. Falls beispielsweise durch das Ablängen gemäß Schritt d) bereits eine erste Dichtlippe mit dem gewünschten Profil gebildet worden ist, so wurde der Schritt e) durch den Schritt d) ausgeführt.

Der Dichtrohling kann bei Bedarf auf beliebige Art und Weise geformt sein und beispielsweise die Form einer Kreisringscheibe oder einer Hülse oder eines Topfes aufweisen.

Das Ablängen in Schritt d) kann nach Bedarf auf beliebige Art und Weise, beispielsweise mechanisch und/oder mit Hilfe eines Lasers erfolgen.

Es kann vorgesehen sein, dass in einem Schritt f) der Dichtrohling an dem ersten Ende aufgeweitet wird. Dabei kann der Schritt f) nach oder vor dem Schritt d) und/oder die Schritte e) und f) in dieser Reihenfolge oder gleichzeitig ausgeführt werden.

In einer ersten Alternative können zusätzlich zu der ersten Dichtlippe nach Bedarf wenigstens eine weitere Dichtlippe erzeugt werden. So kann beispielsweise vorgesehen sein, dass in einem Schritt g) der Dichtrohling an einem zweiten Ende abgelängt wird, und dass in einem Schritt h) an dem zweiten Ende eine zweite Dichtlippe mit dem gewünschten Profil geformt wird. Die vorstehenden Merkmale, die im Zusammenhang mit den Schritten d) und e) und dem ersten Ende des Dichtrohlings beschrieben wurden, können analog auch für die Schritte g) und h) und das zweite Ende des Dichtrohlings gelten. Die Schritte g) und/oder h) können nach Bedarf nach oder gleichzeitig oder vor den Schritten d) und/oder e) und/oder f) ausgeführt werden.

In einer zweiten Alternative kann vorgesehen sein, dass in einem Schritt i) der Dichtrohling an einem zweiten Ende zumindest teilweise in eine Ringnut gedrückt wird, die in der Umfangsfläche des Kolbenkörpers ausgebildet ist. Dieser Schritt i) kann nach Bedarf nach oder gleichzeitig oder vor den Schritten c) und/oder d) und/oder e) und/oder f) ausgeführt werden.

Mit dem von der Erfindung vorgeschlagenen Verfahren kann bevorzugt ein Kolben für eine Kolben-Zylinder-Anordnung, insbesondere einen Stoßdämpferkolben, hergestellt werden, mit:
- einem Kolbenkörper, der eine Umfangsfläche aufweist;
- einer Dichtmanschette, die eine äußere Umfangsfläche, eine innere Umfangsfläche, eine erste Randfläche und eine erste Dichtlippe aufweist und die um die Umfangsfläche des Kolbenkörpers herum verläuft und in axialer Richtung wenigstens einen Teil der Umfangsfläche bedeckt,
wobei:
- die erste Randfläche an einem ersten Ende der Dichtmanschette die beiden Umfangsflächen miteinander verbindet;
- die erste Dichtlippe durch die erste Randfläche und die äußere Umfangsfläche begrenzt wird;
- die erste Dichtlippe in Umfangsrichtung gleichförmig ausgebildet ist.

Mit anderen Worten ausgedrückt bedeutet dies, dass die Dichtlippe in Umfangsrichtung gleichmäßig oder konstant, d.h. unabhängig vom Umgangswinkel, geformt ist oder sie rotationssymmetrisch zur Längsachse des Kolbens ist oder sie im Längsschnitt ein definiertes oder vorgegebenes Profil aufweist. Dies kann beispielsweise dadurch erreicht werden, dass die Dichtlippe der bekannten Kolben auf geeignete Art und Weise nachbearbeitet wird, um sie in die gewünschte Form zu bringen. Dieser Kolben weist eine im Vergleich zu dem bekannten Kolben verbesserte Dichtfunktion auf.

Der Kolbenkörper kann nach Bedarf einteilig ausgebildet sein oder wenigstens zwei Teile umfassen. Er kann zudem nach Bedarf auf seiner Umfangsfläche wenigstens eine Nut, die zumindest teilweise in Umfangsrichtung und/oder in axialer Richtung und/oder schräg hierzu verlaufen kann, und/oder wenigstens eine andere Vertiefung und/oder wenigstens einen Steg, der zumindest teilweise in Umfangsrichtung und/oder in axialer Richtung und/oder schräg hierzu verlaufen kann, und/oder wenigstens eine andere Erhebung aufweisen.

Es kann vorgesehen sein, dass die Dichtlippe radial nach außen von der äußeren Umfangsfläche vorsteht. Dadurch wird eine möglichst spaltfreie Berührung zwischen der Dichtlippe und der Innenwand des Zylinders der Kolben-Zylinder-Anordnung gewährleistet. Außerdem kann hierdurch eine möglicherweise vorliegende "Rückerinnerung" der Dichtmanschette, die auch als "Memory-Effekt" bezeichnet wird, kompensiert werden.

Es kann vorgesehen sein, dass die Dichtmanschette an dem ersten Ende aufgeweitet ist. Dies bedeutet, dass in diesem Bereich die innere Umfangsfläche der Dichtmanschette einen größeren Durchmesser aufweist. Auch hierdurch kann eine gegebenenfalls vorliegende Rückerinnerung kompensiert werden.

Die Form der Dichtlippe kann nach Bedarf beliebig gewählt werden. So kann beispielsweise vorgesehen sein, dass die erste Dichtlippe im Längsschnitt ein Profil aufweist, das einen spitzen oder rechten oder stumpfen Winkel zwischen dem angrenzenden Randbereich der ersten Randfläche und dem angrenzenden Randbereich der äußeren Umfangsfläche hat. Die erste Dichtlippe kann aber anstelle dieses winkligen Profils auch ein rundes oder noch anderes Profil aufweisen.

Auch die Ausrichtung der ersten Dichtlippe relativ zum Kolbenkörper bzw. dem Zylinder kann nach Bedarf beliebig gewählt werden. So kann beispielsweise vorgesehen sein, dass die erste Randfläche im Längsschnitt einen spitzen oder rechten oder stumpfen Winkel zur Längsachse des Kolbens bildet. Die erste Randfläche kann ebenfalls nach Bedarf beliebig geformt sein und beispielsweise im Längsschnitt gerade oder konkav oder konvex gekrümmt oder noch anders geformt sein.

Die Länge der Dichtmanschette und ihre Lage relativ zum Kolbenkörper können nach Bedarf beliebig gewählt werden. So kann beispielsweise vorgesehen sein, dass der Kolbenkörper eine erste Stirnfläche aufweist, die bei dem ersten Ende der Dichtmanschette liegt, und dass die Dichtmanschette an dem ersten Ende in axialer Richtung über die erste Stirnfläche hinausragt. Das Gleiche kann nach Bedarf auch für eine gegenüberliegende, zweite Stirnfläche des Kolbenkörpers und ein gegenüberliegendes, zweites Ende der Dichtmanschette gelten. Es kann beispielsweise aber auch vorgesehen sein, dass der Kolbenkörper aus dem ersten Ende der Dichtmanschette in axialer Richtung herausragt. Das Gleiche kann nach Bedarf auch für das zweite Ende der Dichtmanschette gelten. Des Weiteren kann beispielsweise vorgesehen sein, dass die Dichtmanschette an ihrem ersten Ende und/oder ihrem zweiten Ende in axialer Richtung kürzer als oder länger als oder so lang wie der Kolbenkörper ist.

Die Dichtmanschette kann nach Bedarf zusätzlich zu der ersten Dichtlippe eine weitere Dichtlippe aufweisen. So kann beispielsweise vorgesehen sein, dass die Dichtmanschette eine zweite Randfläche und eine zweite Dichtlippe aufweist, dass die zweite Randfläche an einem zweiten Ende der Dichtmanschette die beiden Umfangsflächen miteinander verbindet, und dass die zweite Dichtlippe durch die zweite Randfläche und die äußere Umfangsfläche begrenzt wird. Dabei können die ersten und die zweite Dichtlippe gleich oder unterschiedlich ausgebildet sein. Die vorstehenden Merkmale, die im Zusammenhang mit der ersten Randfläche, der ersten Dichtlippe, dem zweiten Ende der Dichtmanschette und der zweiten Stirnfläche des Kolbenkörpers beschrieben wurden, können nach Bedarf einzeln oder in beliebiger Kombination analog für die zweite Randfläche, die zweite Dichtlippe, das zweite Ende der Dichtmanschette und die zweite Stirnfläche des Kolbenkörpers gelten. Das Material für die Dichtmanschette kann nach Bedarf beliebig gewählt werden. So kann die Dichtmanschette beispielsweise aus einem warm verformbaren Material, vorzugsweise aus einem Fluorkohlenwasserstoff, weiter vorzugsweise aus PTFE, bestehen.

Der Kolbenkörper kann nach Bedarf auf beliebige Art und Weise hergestellt sein. So kann er beispielsweise pulvermetallurgisch, vorzugsweise durch Sintern, hergestellt sein.

Weitere vorteilhafte Ausführungsformen werden anhand der nachfolgenden Zeichnungen näher erläutert werden. Die daraus hervorgehenden einzelnen Merkmale sind jedoch nicht auf die einzelnen Ausführungsformen beschränkt, sie können vielmehr mit weiter oben beschriebenen einzelnen Merkmalen oder mit einzelnen Merkmalen anderer Ausführungsformen zu weiteren Ausführungsformen verbunden werden. Es zeigen:
- Fig. 1: einen Längsschnitt eines mit dem von der Erfindung vorgeschlagenen Verfahren hergestellten Stoßdämpferkolbens in einer ersten Ausführungsform;
- Fig. 2: einen Längsschnitt des Kolbenkörpers des Stoßdämpferkolbens der Fig. 1;
- Fig. 3: den Ausschnitt III der Fig. 1 in vergrößertem Maßstab;
- Fig. 4: ein Übersichtsdiagramm eines von der Erfindung vorgeschlagenen Ver- fahrens in einer ersten Ausführungsform zur Herstellung des Kolbens der Fig. 1;
- Fig. 5: eine schematische Darstellung des zweiten Schrittes des Verfahrens der Fig. 4;
- Fig. 6: einen Längsschnitt einer Kolben-Zylinder-Anordnung mit einem mit dem von der Erfindung vorgeschlagenen Verfahren hergestellten Stoßdämpferkolben in einer zweiten Ausführungsform;
- Fig. 7: den Ausschnitt VII der Fig. 6 in vergrößertem Maßstab;
- Fig. 8: einen Längsschnitt des Kolbens der Fig. 6 in einem Verfahrensschritt, in dem der Dichtrohling abgelängt wird;
- Fig. 9: einen Längsschnitt des Kolbens der Fig. 8 in einem Verfahrensschritt, in dem der abgelängte Dichtrohling aufgeweitet und zwei Dichtlippen geformt werden; und
- Fig. 10: einen vergrößerten Längsschnitt einer Dichtlippe mit einem anderen Profil.

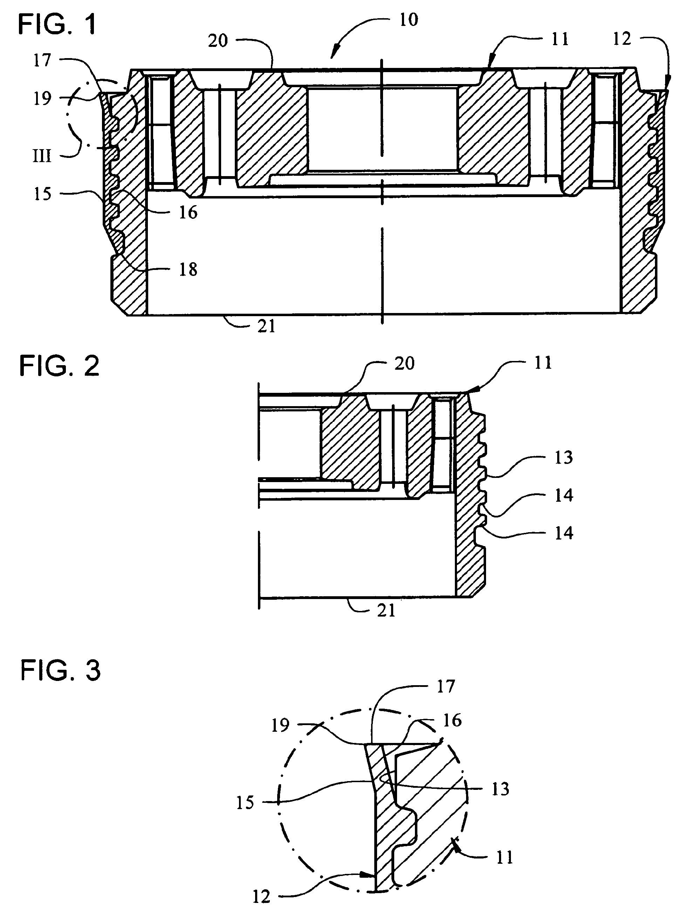

In der Fig. 1 ist ein mit dem von der Erfindung vorgeschlagenen Verfahren hergestellten Kolben 10 in einer ersten Ausführungsform dargestellt und hier als Stoßdämpferkolben ausgebildet. Er weist einen Kolbenkörper 11 und eine Dichtmanschette 12 auf. Der Kolbenkörper 11 weist eine Umfangsfläche 13 auf, in der fünf Ringnuten 14 ausgebildet sind, wie gut in der Fig. 2 zu erkennen ist. Die Dichtmanschette 12 weist eine äußere Umfangsfläche 15, eine innere Umfangsfläche 16, eine erste Randfläche 17, die in der Fig. 1 oben liegt, eine zweite Randfläche 18, die in der Fig. 1 unten liegt, und eine erste Dichtlippe 19 auf, die in der Fig. 3 vergrößert dargestellt ist. Die Dichtmanschette 12 verläuft um die Umfangsfläche 13 herum und bedeckt in axialer Richtung einen oberen Teil dieser Umfangsfläche 13. Die erste Randfläche 17 verbindet an dem ersten, in den Fig. 1 und 3 oberen Ende der Dichtmanschette 12 die äußere und innere Umfangsfläche 15, 16 miteinander und begrenzt zusammen mit der äußeren Umfangsfläche 15 die erste Dichtlippe 19. Die zweite Randfläche 18 verbindet an dem zweiten, in der Fig. 1 unteren Ende der Dichtmanschette 12 die äußere und die innere Umfangsfläche 15, 16 miteinander. Die Dichtmanschette 12 ist an ihrem zweiten Ende radial einwärts gerichtet, so dass die zweite Randfläche in der untersten der fünf Ringnuten 14 liegt. Die innere Umfangsfläche 16 liegt in den Abschnitten zwischen jeweils zwei Ringnuten 14 eng an der Umfangsfläche 13 an und greift im Bereich der Ringnuten 14 in diese ein.

Bei dieser ersten Ausführungsform des Kolbens 10 steht die erste Dichtlippe 19 radial nach außen von der äußeren Umfangsfläche 15 vor, wie gut in der Fig. 3 zu erkennen ist. Außerdem ist die Dichtmanschette 12 an dem ersten Ende aufgeweitet, so dass sie in diesem Bereich nicht am Kolbenkörper 11 anliegt. Des Weiteren weist hier die erste Dichtlippe 19 in dem dargestellten Längsschnitt ein Profil auf, dass einen spitzen Winkel zwischen dem angrenzenden Randbereich der ersten Randfläche 17 und dem angrenzenden Randbereich der äußeren Umfangsfläche 15 bildet. Darüber hinaus bildet hier die erste Randfläche 17 in dem dargestellten Längsschnitt einen rechten Winkel zur Längsachse des Kolbens 10.

Bei dieser ersten Ausführungsform weist der Kolbenkörper 11 eine erste und eine zweite Stirnfläche 20, 21 auf, die jeweils bei dem ersten bzw. zweiten Ende der Dichtmanschette 12 liegen, und ragt aus dem ersten und zweiten Ende der Dichtmanschette 12 in axialer Richtung heraus. Die Dichtmanschette 12 ist hier also kürzer als der Kolbenkörper 11. Außerdem besteht die Dichtmanschette 12 hier aus PTFE, das ein warm verformbares Material ist, und ist der Kolbenkörper 11 durch Sintern hergestellt.

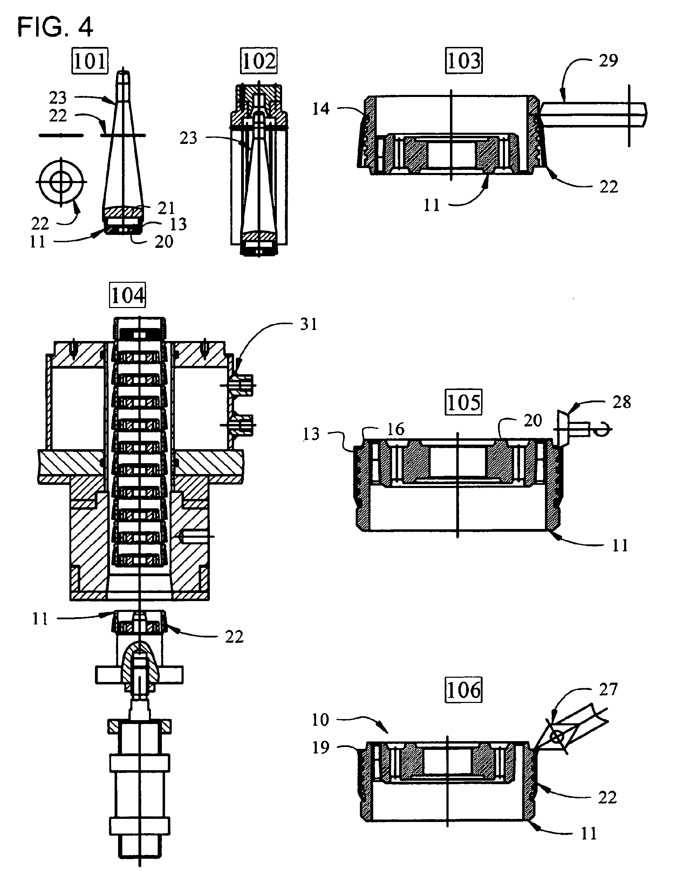

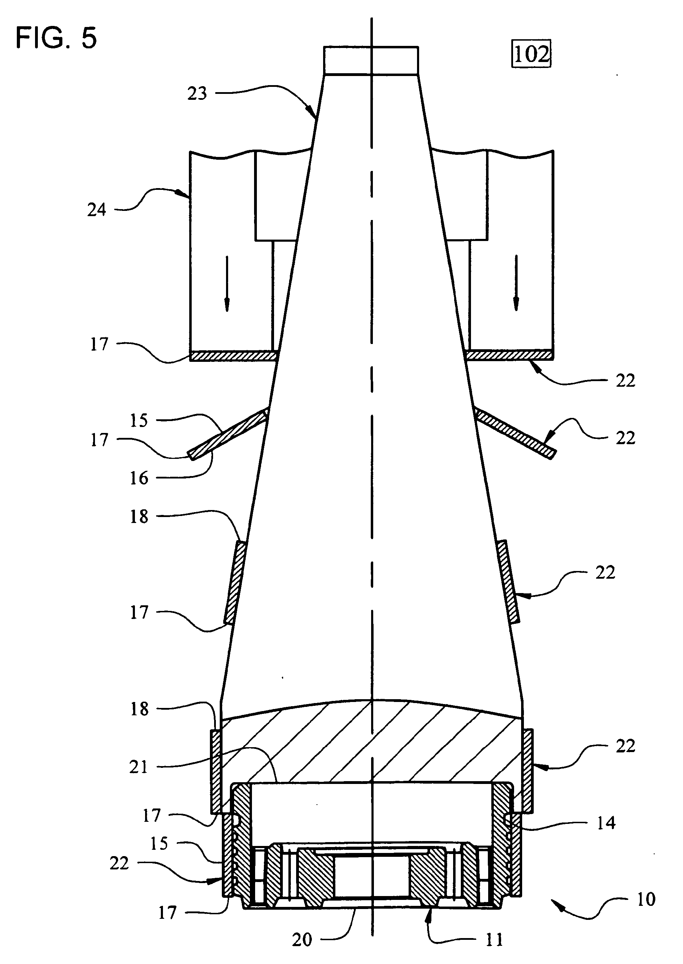

In den Fig. 4 und 5 ist ein von der Erfindung vorgeschlagenes Verfahren in einer ersten Ausführungsform zur Herstellung des Kolbens 10 der Fig. 1 dargestellt.

In einem ersten Schritt 101 wird ein zugeführter Dichtrohling 22, der bei dieser ersten Ausführungsform des Verfahrens eine Kreisringscheibe aus PTFE ist, von oben auf das schmale Ende eines Aufziehkonus 23 geschoben. Außerdem wird der Aufziehkonus 23 auf einen zugeführten Kolbenkörper 11 derart gesetzt, dass die erste Stirnfläche 20 des Kolbenkörpers 11 nach unten weist und das weite Ende des Aufziehkonus 23 die zweite Stirnfläche 21 des Kolbenkörpers 11 berührt.

In einem zweiten Schritt 102, der in der Fig. 5 detaillierter und vergrößert dargestellt ist, wird eine Spreizwelle 24 aus Kunststoff von oben über das schmale Ende des Aufziehkonus 23 gesetzt und in Richtung der Kolbenachse nach unten geschoben, so dass der kreisringförmige Dichtrohling 22 zum Einen aufgeweitet und zum Anderen zum Aufziehkonus 23 hin umgelegt wird, bis er sich in der gewünschten Position um die Umfangsfläche 13 des Kolbenkörpers 11 legt.

In der Fig. 5 sind die einzelnen Etappen dieses zweiten Schrittes 102 in ihrer zeitlichen Abfolge von oben nach unten dargestellt, so dass der Kolben 10 nach Abschluss des Schrittes ganz unten gezeigt ist. In dem zweiten Schritt 102 wird zunächst der Dichtrohling 22 mit seiner Öffnung auf das schmale Ende des Aufziehkonus 23, das in der Fig. 5 oben liegt, aufgeschoben und mit Hilfe der Spreizwelle 24 kontinuierlich über den Aufziehkonus 23 zu dessen weitem Ende hin, also nach unten in der Fig. 5 geschoben. Dabei kippt der äußere Rand des Dichtrohlings 22 immer mehr nach unten, bis die in der Fig. 5 untere Stirnfläche des zu Beginn kreisringscheibenförmigen Dichtrohlings 22 eng an der konischen Mantelfläche des Aufziehkonus 23 anliegt. In diesem Zustand ist gut zu erkennen, dass diese untere sowie die gegenüberliegende, in der Fig. 5 obere Stirnfläche des ursprünglichen Dichtrohlings 22 später einmal die innere bzw. äußere Umfangsfläche 16, 15 der fertigen Dichtmanschette 12 bilden werden. Es ist ebenfalls gut zu erkennen, dass die äußere und die innere, die Öffnung des ursprünglichen, kreisringförmigen Dichtrohlings 22 bildende Randfläche später einmal die erste bzw. zweite Randfläche 17, 18 der fertigen Dichtmanschette 12 bilden werden. Wenn der nun trichterförmige Dichtrohling 22 das weite Ende des Aufziehkonus 23 erreicht hat, wird er von der Spreizwelle 24 weiter in der Fig. 5 von oben über die zweite Stirnfläche 21 des Kolbenkörpers 11 geschoben, bis seine erste Randfläche 17 in der gewünschten Position kurz oberhalb der ersten Stirnfläche 20 und seine zweite Randfläche 18 auf Höhe des in der Fig. 5 oberen Randes der obersten Ringnut 14 liegen. Dabei legt sich der Dichtrohling 22 um den Kolbenkörper 11.

In einem dritten Schritt 103 wird mit Hilfe einer Walze 29 das zweite, in der Fig. 4 obere Ende des Dichtrohlings 22 in die oberste Ringnut 14 gedrückt. Dadurch wird der Dichtrohling 22 durch Formschluss an dem Kolbenkörper 11 fixiert, so dass verhindert wird, dass der Dichtrohling 22 in dem folgenden Schritt weiter nach unten in der Fig. 4 relativ zu dem Kolbenkörper 11 verschoben werden kann.

In einem vierten Schritt 104 wird der Kolbenkörper 11 mit dem fixierten Dichtrohling 22 von unten mit seiner zweiten Stirnfläche 21 voraus in eine beheizte und gekühlte zylindrische Rundvorrichtung 30 nach oben geschoben. In einem ersten, in der Fig. 4 unteren, beheizten Bereich der Rundvorrichtung 30 wird der Dichtrohling 22 unter Wärmezufuhr und durch axiales und radiales Verpressen präzise auf den gewünschten Außendurchmesser des fertigen Kolbens 10 im Bereich der äußeren Umfangsfläche 15 kalibriert und in einem zweiten, in der Fig. 4 oberen, gekühlten Bereich der Rundvorrichtung 30 unter Wärmeabfuhr kontrolliert abgekühlt. Eine solche Rundvorrichtung ist im Stand der Technik bekannt und wird hier daher nicht näher beschrieben.

In einem fünften Schritt 105 wird der Kolbenkörper 11 mit dem angepressten Dichtrohling 22 um die Kolbenachse gedreht, wobei nun seine erste Stirnfläche 20 nach oben weist, und dabei von oben eine rotierende Kegelwalze 28 zwischen die Umfangsfläche 13 des Kolbenkörpers 11 und die innere Umfangsfläche 16 des Dichtrohlings 22 gedrückt, wodurch der Dichtrohling 22 an seinem ersten Ende aufgeweitet wird.

In einem sechsten Schritt 106 wird der Kolbenkörper 11 mit dem aufgeweiteten Dichtrohling 22 um die Kolbenachse gedreht und dabei radial von außen eine Klinge 27 an das erste Ende des Dichtrohlings 22 gedrückt, wodurch der Dichtrohling 22 an seinem ersten Ende abgelängt wird, wobei der Schnitt in rechtem Winkel zur Längsachse des Kolbens 10 geführt wird. Dieses Ablängen kann wie hier mechanisch, beispielsweise mit Hilfe der Klinge 27, und/oder mit Hilfe wenigstens eines, hier nicht dargestellten Lasers erfolgen. Somit wurde die erste Dichtlippe 19 mit dem gewünschten Profil geformt, das in Umfangsrichtung gleichförmig ist, und ist der Kolben 10 in der ersten Ausführungsform fertig gestellt.

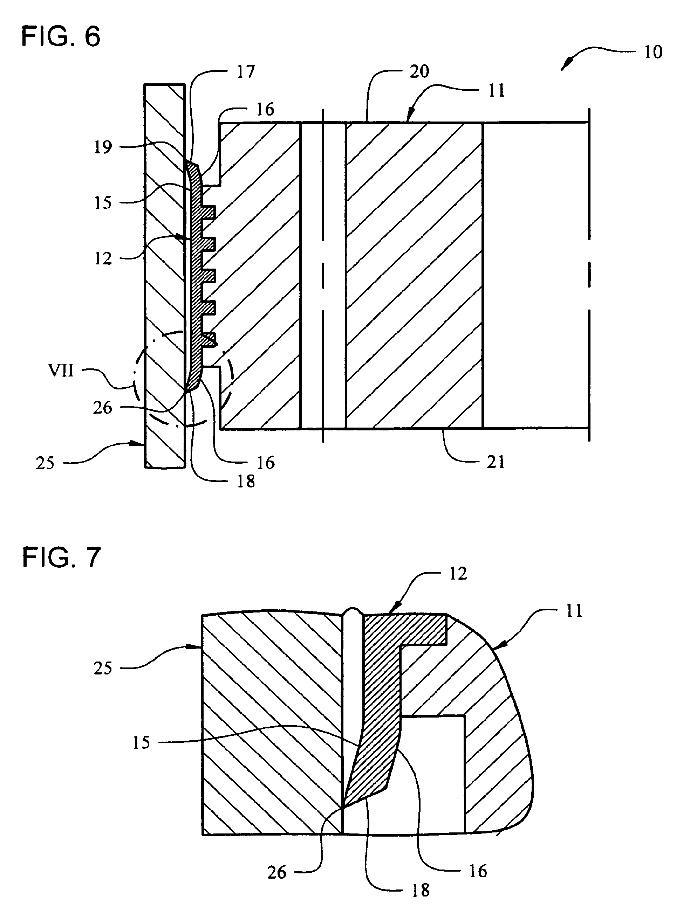

In den Fig. 6 und 7 ist eine Kolben-Zylinder-Anordnung dargestellt, die einen Zylinder 25 und einen mit dem von der Erfindung vorgeschlagenen Verfahren hergestellten Kolben 10 in einer zweiten Ausführungsform aufweist, die der ersten Ausführungsform ähnelt, so dass im Folgenden lediglich die Unterschiede ausführlicher beschrieben werden. Bei dieser zweiten Ausführungsform ist der Kolben 10 spiegelsymmetrisch zur Radialmittelebene ausgeführt, so dass die Dichtmanschette 12 zusätzlich zu der ersten Dichtlippe 19 eine zweite Dichtlippe 26 aufweist, die durch die zweite Randfläche 18 und die äußere Umfangsfläche 15 begrenzt wird, wie gut in der Fig. 7 zu erkennen ist. Die erste und die zweite Dichtlippe 19, 26 sind hier gleich ausgebildet, stehen jeweils radial nach außen von der äußeren Umfangsfläche 15 vor und weisen jeweils im Längsschnitt ein Profil auf, das einen spitzen Winkel zwischen dem angrenzenden Bereich der ersten bzw. zweiten Randfläche 17, 18 und dem angrenzenden Randbereich der äußeren Umfangsfläche 15 bildet. Sowohl die erste als auch die zweite Randfläche 17, 18 bildet hier im Längsschnitt einen spitzen Winkel zur Längsachse des Kolbens 10

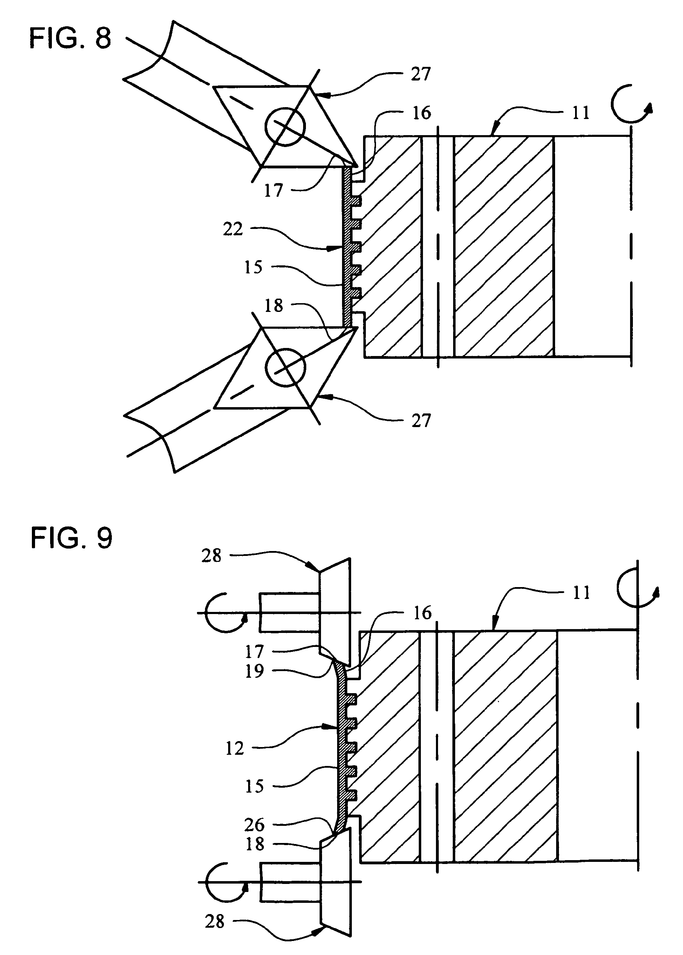

In den Fig. 8 und 9 sind zwei Schritte eines von der Erfindung vorgeschlagenen Verfahrens in einer zweiten Ausführungsform zur Herstellung des Kolbens 10 der Fig. 6 dargestellt, die der ersten Ausführungsform des Verfahrens ähnelt, so dass im Folgenden lediglich die Unterschiede näher beschrieben werden. Bei dieser zweiten Ausführungsform entfällt der zweite Schritt der ersten Ausführungsform, in dem das zweite Ende des Dichtrohlings 22 radial einwärts gedrückt wurde, da ja hier an diesem zweiten Ende die zweite Dichtlippe 26 geformt werden soll. Bei dieser zweiten Ausführungsform wird nach dem dritten Schritt des Kalibrierens in einem vierten Schritt, der in der Fig. 8 dargestellt ist, der Dichtrohling 22 an seinen beiden Enden abgelängt, was hier mechanisch mit Hilfe von zwei Klingen 27 erfolgt, die jeweils einen Schnitt in rechtem Winkel zur Längsachse des Kolbens ausführen. Das Ablängen erfolgt hier rotationsmechanisch, d.h. die beiden Klingen 27 werden radial einwärts gegen den Kolbenkörper 11 gedrückt, während dieser mit dem aufgepressten Dichtrohling 22 um die Kolbenachse gedreht wird.

In einem fünften Schritt, der in der Fig. 9 dargestellt ist, werden zum einen an den beiden abgelängten Enden des Dichtrohlings 22 die erste und die zweite Dichtlippe 19, 26 mit dem gewünschten Profil geformt und wird zum anderen der Dichtrohling 22 an seinen beiden Enden aufgeweitet. Dies erfolgt hier rotationsmechanisch mit Hilfe von zwei Kegelwalzen 28, die jeweils um eine Achse, die die Kolbenachse in rechtem Winkel schneidet gedreht werden, eine sich radial von der Kolbenachse weg, also in der Fig. 9 nach links verjüngende Mantelfläche aufweisen und von oben bzw. unten gegen das abgelängte erste bzw. zweite Ende des Dichtrohlings 22 gedrückt werden, während der Kolbenkörper 11 mit dem aufgepressten Dichtrohling 22 um die Kolbenachse gedreht wird. Somit wurden an den beiden Enden des Dichtrohlings 22 die beiden Dichtlippen 19, 26 geformt und der Kolben 10 in der zweiten Ausführungsform fertig gestellt.

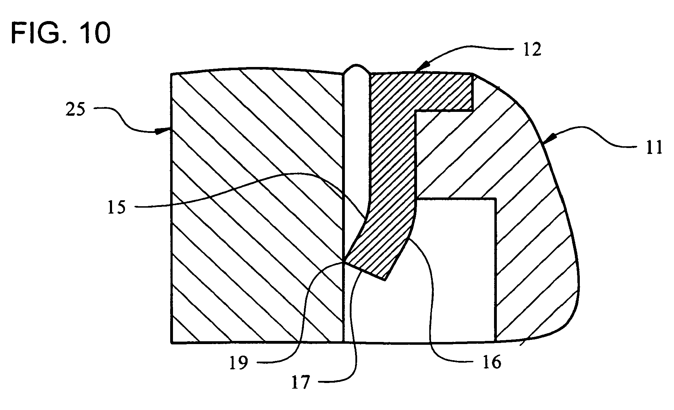

In der Fig. 10 ist eine erste Dichtlippe 19 mit einem anderen Längsprofil dargestellt, bei der die erste Randfläche 17 schräg radial einwärts und axial nach unten verläuft und einen rechten Winkel mit dem angrenzenden Randbereich der äußeren Umfangsfläche 15 sowie einen stumpfen Winkel zur Kolbenachse bildet.

### BEZUGSZEICHENLISTE

- 10: Kolben
- 11: Kolbenkörper
- 12: Dichtmanschette
- 13: Umfangsfläche von 11
- 14: Ringnuten in 13
- 15: äußere Umfangsfläche von 12
- 16: innere Umfangsfläche von 12
- 17: erste Randfläche von 12
- 18: zweite Randfläche von 12
- 19: erste Dichtlippe
- 20: erste Stirnfläche von 11
- 21: zweite Stirnfläche von 11
- 22: Dichtrohling
- 23: Aufziehkonus
- 24: Spreizwelle
- 25: Zylinder
- 26: zweite Dichtlippe
- 27: Klingen
- 28: Kegelwalzen
- 29: Walze
- 30: Rundvorrichtung
- 101-106: Verfahrensschritte

## Patentansprüche

1. Verfahren zur Herstellung eines Kolbens (10), mit den Schritten, dass:
a) ein Dichtrohling (22) und ein Kolbenkörper (11) bereit gestellt werden;
b) dann der Dichtrohling (22) über den Kolbenkörper (11) geschoben wird;
c) der Dichtrohling (22) an den Kolbenkörper (11) gepresst wird;
**dadurch gekennzeichnet dass**:
d) der Dichtrohling (22) an einem ersten Ende abgelängt wird;
e) an dem ersten Ende eine erste Dichtlippe (19) mit dem gewünschten Profil geformt wird.

2. Verfahren nach Anspruch 1, **dadurch gekennzeichnet, dass** die Schritte d) und e) in dieser Reihenfolge oder gleichzeitig ausgeführt werden.

3. Verfahren nach einem der vorhergehenden Ansprüche, **dadurch gekennzeichnet, dass** der Dichtrohling (22) die Form einer Kreisringscheibe oder einer Hülse oder eines Topfes aufweist.

4. Verfahren nach einem der vorhergehenden Ansprüche, **dadurch gekennzeichnet, dass** das Ablängen in Schritt d) mechanisch und/oder mit Hilfe eines Lasers erfolgt.

5. Verfahren nach einem der vorhergehenden Ansprüche, **gekennzeichnet durch** den Schritt, dass:
f) der Dichtrohling (22) an dem ersten Ende aufgeweitet wird.

6. Verfahren nach Anspruch 5, **dadurch gekennzeichnet, dass** der Schritt f) nach oder vor dem Schritt d) ausgeführt wird.

7. Verfahren nach einem der Ansprüche 5 oder 6, **dadurch gekennzeichnet, dass** die Schritte e) und f) in dieser Reihenfolge oder gleichzeitig ausgeführt werden.

8. Verfahren nach einem der Ansprüche 1 bis 7, **gekennzeichnet durch** die Schritte, dass:
g) der Dichtrohling (22) an einem zweiten Ende abgelängt wird;
h) an dem zweiten Ende eine zweite Dichtlippe (26) mit dem gewünschten Profil geformt wird.

9. Verfahren nach einem der Ansprüche 1 bis 7, **gekennzeichnet durch** den Schritt, dass:
i) der Dichtrohling (22) an einem zweiten Ende zumindest teilweise in eine Ringnut (14) gedrückt wird, die in der Umfangsfläche (13) des Kolbenkörpers (11) ausgebildet ist.

## Claims

1. A method of producing a piston (10), with the steps that:
a) a sealing blank (22) and a piston body (11) are provided;
b) the sealing blank (22) is then pushed over the piston body (11);
c) the sealing blank (22) is pressed onto the piston body (11);
**characterized in that**
d) the sealing blank (22) is cut to length at a first end;
e) a first sealing lip (19) with the desired profile is formed at the first end.

2. A method according to Claim 1, **characterized in that** steps d) and e) are performed in this sequence or simultaneously.

3. A method according to one of the preceding Claims, **characterized in that** the sealing blank (22) is in the form of an annular disc or a sleeve or a pot.

4. A method according to any one of the preceding Claims, **characterized in that** the cutting to length in step d) is performed mechanically and/or with the aid of a laser.

5. A method according to any one of the preceding Claims, **characterized by** the step that f) the sealing blank (22) is widened at the first end.

6. A method according to Claim 5, **characterized in that** step f) is performed after or before step d).

7. A method according to one of Claims 5 or 6, **characterized in that** steps e) and f) are performed in this sequence or simultaneously.

8. A method according to any one of Claims 1 to 7, **characterized by** the steps that
g) the sealing blank (22) is cut to length at a second end;
h) a second sealing lip (26) with the desired profile is formed at the second end.

9. A method according to any one of Claims 1 to 7, **characterized by** the step that
i) the sealing blank (22) is pressed at a second end at least in part into an annular groove (14) which is formed in the peripheral face (13) of the piston body (11).

## Revendications

1. Procédé de fabrication d'un piston (10), comportant les étapes, selon lesquelles :
a) une ébauche de joint (22) et un corps de piston (11) sont mis à disposition ;
b) ensuite l'ébauche de joint (22) est emmanchée sur le corps de piston (11) ;
c) l'ébauche de joint (22) est pressée sur le corps de piston (11) ;
**caractérisé en ce que**
d) l'ébauche de joint (22) est coupée à longueur au niveau d'une première extrémité ;
e) une première lèvre d'étanchéité (19) est formée avec le profil souhaité sur la première extrémité.

2. Procédé selon la revendication 1, **caractérisé en ce que** les étapes d) et e) sont mises en oeuvre dans cet ordre ou simultanément.

3. Procédé selon l'une quelconque des revendications précédentes, **caractérisé en ce que** l'ébauche de joint (22) a la forme d'un disque circulaire ou d'une douille ou d'un godet.

4. Procédé selon l'une quelconque des revendications précédentes, **caractérisé en ce que** la coupe à longueur dans l'étape d) est effectuée mécaniquement et/ou au moyen d'un laser.

5. Procédé selon l'une quelconque des revendications précédentes, **caractérisé par** l'étape, selon laquelle :
f) l'ébauche de joint (22) est élargie au niveau de la première extrémité.

6. Procédé selon la revendication 5, **caractérisé en ce que** l'étape f) est mise en oeuvre après ou avant l'étape d).

7. Procédé selon la revendication 5 ou 6, **caractérisé en ce que** les étapes e) et f) sont mises en oeuvre dans cet ordre ou simultanément.

8. Procédé selon l'une quelconque des revendications 1 à 7, **caractérisé par** les étapes, selon lesquelles :
g) l'ébauche de joint (22) est coupée à longueur au niveau d'une deuxième extrémité ;
h) une deuxième lèvre d'étanchéité (26) est formée avec le profil souhaité sur la deuxième extrémité.

9. Procédé selon l'une quelconque des revendications 1 à 7, **caractérisé par** l'étape, selon laquelle :
i) l'ébauche de joint (22) est pressée au niveau de la deuxième extrémité au moins en partie dans une rainure annulaire (14), qui est réalisée sur la surface périphérique (13) du corps de piston (11).
